# EUROPEAN PATENT APPLICATION

(11) **EP 4 722 314 A1**
(43) Date of publication of application: **08.04.2026**
(21) Application number: 24810961.3
(22) Date of filing: 14.05.2024
(51) Int. Cl.: C09D 183/07, C08K 5/01, C08L 83/05, C08L 83/07, C09D 7/63, C09D 183/05, C09K 3/00

(54) **RELEASE AGENT COMPOSITION AND RELEASE SHEET**

(30) Priority: 24.05.2023 JP 2023085604
(71) Applicant: SHIN-ETSU CHEMICAL CO., LTD., Tokyo 100-0005 (JP)
(72) Inventor: SHIRAKAMI, Kento, Annaka-shi, Gunma 379-0224 (JP); KOBAYASHI, Ataru, Annaka-shi, Gunma 379-0224 (JP); IHARA, Toshiaki, Annaka-shi, Gunma 379-0224 (JP)
(74) Representative: Schicker, Silvia
(86) International application number: PCT/JP2024/017707
(87) International publication number: WO 2024/241954

(57) **Abstract**

The present invention is a release agent composition including: organopolysiloxane (A) having in the side chain at least 3 alkenyl groups bonded to a silicon atom, a viscosity of 100 mPa·s or more, and a vinyl value of 0.05 to 0.3 mol/100 g; organopolysiloxane (B) having R'₃SiO_{1/2} and SiO_{4/2} and/or R'SiO_{3/2} units, having at least 2 alkenyl groups bonded to a silicon atom, and having a three-dimensional network structure, wherein R' may be s monovalent hydrocarbon group having 1 to 12 carbon atoms; a liquid olefin (C); organohydrogenpolysiloxane (D) having at least 2 hydrogen atoms bonded to a silicon atom; and a platinum group metal-based catalyst (E). This can provide a solventless release agent composition that does not have excessively high addition reactivity, prevents gel generation after preparation, and can form a crosslinked structure that achieves excellent heavy release; and a release sheet on which a cured film of the composition is formed.

## Description

### TECHNICAL FIELD

The present invention relates to an addition reaction-curable release agent composition that provides an excellent heavy-release effect, and a release sheet using the release agent composition. More specifically, the present invention relates to a release agent composition that is not a solvent-based or emulsion-based release agent composition, and more preferably to a solventless release agent composition.

### BACKGROUND ART

In the prior art approach for preventing adhesion or sticking between a base material such as paper and a plastic sheet and an adhesive material, a cured film of an organopolysiloxane composition is formed on a surface of a base material to impart release properties. As the method above for forming a cured film of organopolysiloxane on a surface of a base material, a method for forming a releasable coating film by an addition reaction is widely used because of its excellent curability.

Such methods for forming a releasable coating film by an addition reaction include: a type in which an organopolysiloxane composition is dissolved in an organic solvent; a type in which it is dispersed in water using an emulsifier to form an emulsion; and a solventless type in which only organopolysiloxane is used. However, because the solvent type has a disadvantage of being potentially harmful to humans and the environment, there is a growing trend to switch from a solvent type to a solventless type for safety reasons.

In general, organopolysiloxane compositions for release papers are required to have different release force depending on the purpose, and for applications requiring heavy release, compositions containing organopolysiloxane having a three-dimensional network structure known as an MQ resin (an "M" unit is an R'₃SiO_{1/2} unit, a "Q" unit is a SiO_{4/2} unit, wherein R' represents a monovalent hydrocarbon group.) are widely used.

However, alkenyl group-containing MQ resins are often resinous or highly viscous compounds, and when added in large quantities, they cannot be used unless they are diluted with an organic solvent. Although they can be used without a solvent when added in small quantities, in such cases they have insufficient heavy-release effect.

Patent Document 1 discloses a release modifier including an organopolysiloxane resin-organopolysiloxane condensation product obtained by condensation reaction of 100 parts by mass of an MQ resin (a1) having a mole ratio of M units to Q units of 0.6 to 1.0 and a hydroxyl or alkoxy group content of 0.3 to 2.0 mass% with 20 to 150 parts by mass of a linear polydiorganosiloxane (a2) having hydroxyl or alkoxy groups and an average degree of polymerization of 100 to 1,000. In Patent Document 1, the release force of Examples increases only 1.4 to 2.2 times at a low speed (0.3 m/min) compared to that of Comparative Examples containing no condensation reaction product, failing to achieve a sufficient heavy-release effect. This is presumably because the hydroxyl or alkoxy group content of (a1) to be used is low in the range of 0.3 to 2.0 mas%, which results in few reaction sites with (a2) and insufficient crosslinked structure by the condensation. Furthermore, since the condensation reaction between the components (a1) and (a2) is time-consuming, there is a demand for a heavy-release composition that can be manufactured by a simpler, less expensive method.

Patent Document 2 achieves a heavy release by blending a pressure-sensitive adhesive as a release modifier into a mixture of a reactive siloxane polymer, a siloxane crosslinker, and a catalyst. However, increasing the amount of pressure-sensitive adhesive is thought to produce adhesive effects, so there is a limit to how heavy release can be achieved, and Examples do not suggest that a sufficient heavy-release effect is achieved. Furthermore, the pressure-sensitive adhesives have high viscosity and are generally diluted in a solvent such as toluene. However, with a recent trend toward solventless adhesives, adding them to compositions requires replacing a solvent with an α-olefin or the like.

Patent Document 3 discloses a mixture of an alkenyl group-containing MQ resin, organofunctional siloxane with a low viscosity of 5 to 80 centipoise, and organohydrogenpolysiloxane. Due to the high addition reactivity of the organofunctional siloxane, a crosslinked structure can be easily formed, achieving heavy release. However, when the inventors reproduced the composition above, they found that due to its high reactivity, a silicone gel, believed to be an addition reaction product, formed in the composition immediately after preparation. It is believed to be due to an imbalance in distribution of catalyst concentration that occurs immediately after adding the catalyst, allowing crosslinking to proceed at room temperature.

### CITATION LIST

### PATENT LITERATURE

Patent Document 1: JP2010-37557A
Patent Document 1: JP2007-523225A
Patent Document 1: JP2017-523258A

### SUMMARY OF INVENTION

### TECHNICAL PROBLEM

The present invention has been made in view of the above circumstances and has for its object to provide: a solventless release agent composition that does not have excessively high addition reactivity, prevents gel generation after preparation, and yet is capable of forming a crosslinked structure that can achieve excellent heavy release; and a release sheet on which a cured film of the composition is formed.

### SOLUTION TO PROBLEM

To solve the problems above, the present invention provides a release agent composition comprising the following components (A) to (E),
(A) linear or branched organopolysiloxane having in the side chain at least 3 alkenyl groups bonded to a silicon atom per molecule, a viscosity at 25°C of 100 mPa·s or more, and a vinyl value of 0.05 mol/100 g or more and 0.3 mol/100 g or less: 20 to 65 parts by mass based on 100 parts by mass of sum of the components (A) and the following component (B);
(B) organopolysiloxane having R'₃SiO_{1/2} unit and SiO_{4/2} unit and/or R'SiO_{3/2} unit, having at least 2 alkenyl groups bonded to a silicon atom per molecule, and having a three-dimensional network structure, wherein in each of the formulae above R' represents a substituted or unsubstituted monovalent hydrocarbon group having 1 to 12 carbon atoms and optionally having an unsaturated bond: 35 to 80 parts by mass based on 100 parts by mass of the sum of the components (A) and (B);
(C) an olefin that is in a liquid state at 25°C: 0 to 20 parts by mass based on 100 parts by mass of the sum of the components (A) and (B);
(D) organohydrogenpolysiloxane having at least 2 hydrogen atoms bonded to a silicon atom per molecule: an amount such that the ratio of the number of hydrogen atoms bonded to a silicon atom in the component (D) relative to total number of alkenyl groups in the components (A), (B), and (C) is 0.5 to 5; and
(E) a platinum group metal-based catalyst: an effective amount.

Such a release agent composition is a solventless type, does not have excessively high addition reactivity, prevents gel generation after preparation, and yet is capable of forming a crosslinked structure that can achieve excellent heavy release.

Further, in the present invention, the component (A) is preferably represented by the following average composition formula (1),

(R²₃SiO_{1/2})ₐ(R¹R²₂SiO_{1/2})_{b}(R¹R²SiO)_{c}(R²₂SiO)_{d}(R¹SiO_{3/2})ₑ(R²SiO_{3/2} )_{f}(SiO_{4/2})_{g} (1)

wherein R¹ independently represents an alkenyl group; R² independently represents an unsubstituted or substituted monovalent hydrocarbon group not having an alkenyl group; and "a", "b", "c", "d", "e", "f", and "g" each independently represent numbers of 0 or more and satisfy 0≤a, 0≤b, 2≤a+b, 3≤c, 50≤d, 90≤c+d≤400, 0≤e≤8, 3≤b+c+e, 0≤f≤8, 0≤g≤8, and 0≤f+g≤8.

Such a component (A) can achieve a more preferable viscosity for a release agent composition and a more preferable release force for a cured product.

Further, in the present invention, the component (B) is preferably represented by the following average composition formula (2),

(R⁴₃SiO_{1/2})ₕ(R³R⁴₂SiO_{1/2})ᵢ(R³R⁴SiO)ⱼ(R⁴₂SiO)ₖ(R³SiO_{3/2})ₗ(R⁴SiO_{3/2} )ₘ(SiO_{4/2})ₙ (2)

wherein R³ each independently represents an alkenyl group having 2 to 8 carbon atoms; R⁴ each independently represents an unsubstituted or substituted monovalent hydrocarbon group not being an alkenyl group and having 1 to 12 carbon atoms, wherein at least 80 mol% of all R⁴s are methyl groups; and "h", "i", "j", "k", "l", "m", and "n" each independently represent number of 0 or more and satisfy i+j+l>0, l+m+n>0, and h+i+j+k+l+m+n=1.

When the component (B) is as described above, a more preferable heavy-release effect can be obtained.

Further, in the present invention, the component (C) is preferably a linear monoolefin having 10 to 18 carbon atoms or a branched monoolefin having 10 or more carbon atoms.

Such a component (C) is preferable because it can lower the viscosity of the release agent composition and the crosslinking density does not become too high.

Further, in the present invention, the component (D) is preferably linear or branched organohydrogenpolysiloxane represented by the following average composition formula (3), having in the side chain at least 2 hydrogen atoms bonded to a silicon atom per molecule, and having a viscosity at 25°C of 100 mPa·s or more,

(R⁶₃SiO_{1/2})ₚ(R⁵R⁶₂SiO_{1/2})_{q}(R⁵R⁶SiO)ᵣ(R⁶₂SiO)ₛ(R⁵SiO_{3/2})ₜ(R⁶SiO_{3/2} )ᵤ(SiO_{4/2})ᵥ (3)

wherein R⁵ independently represents a hydrogen atom; R⁶ independently represents an unsubstituted or substituted monovalent hydrocarbon group other than a hydrogen atom; and "p", "q", "r", "s", "t", "u", and "v" each independently represent numbers of 0 or more and satisfy 0≤p, 0≤q, 0≤p+q, 0≤r, 40≤s, 90≤r+s≤400, 0≤t≤8, 2≤q+r+t, 0≤u≤8, 0≤v≤8, and 0≤u+v≤8.

With such a component (D), the release agent composition has a more suitable viscosity, making handling properties and coating precision more favorable.

Further, in the present invention, the release agent composition preferably contains 0 to 20 parts by mass of organopolysiloxane (F) represented by the following formula, 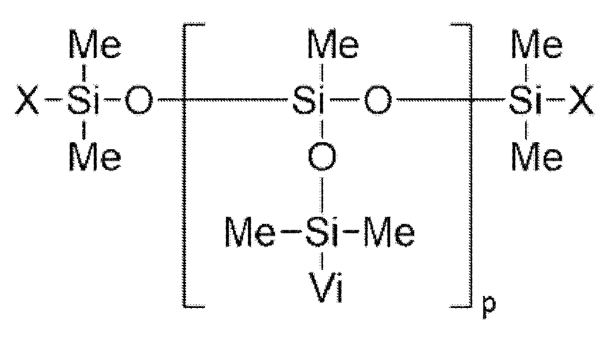 wherein "P" satisfies 1≤p≤20; "x" represents a group selected from a methyl group, a methoxy group, and a vinyl group, or an oxygen atom that gives a ring structure.

When such a component (F) is contained, a more suitable release agent composition can be obtained.

Further, in the present invention, the release agent composition preferably has a viscosity at 25°C of 50 to 1000 mPa·s.

Such a viscosity is preferable because it allows coating when forming a cured film on a base material and results in a uniform coating film.

Further, in the present invention, the release agent composition does not preferably contain a solvent.

Such a release agent composition that does not contain a solvent is preferable because it is highly safe for the human body and the environment.

Further, the present invention provides a release sheet comprising a sheet-like base material and a cured film of the release agent composition described above on either or both of the surfaces of the base material.

Such a release sheet has an excellent heavy-release and is preferable.

Further, in the present invention, the release sheet preferably has a release force of 3.0 N/25mm or more, measured when a polyester adhesive tape with a 25 mm width stuck to the cured film is peeled off at an angle of 180 degrees at a peeling speed of 0.3 m/min.

Such a release sheet is preferable because it reliably has a heavy-release effect.

### ADVANTAGEOUS EFFECTS OF INVENTION

The inventive release agent composition can provide a very high release strength when compared to conventional heavy-release compositions. It also has an excellent pot life and shows less decrease in release strength over time after curing, making it useful as a material for a release sheet for a heavy release. Furthermore, an excellent release sheet can be provided by using such a release agent composition.

### DESCRIPTION OF EMBODIMENTS

As described above, it has been desired to develop: a solventless release agent composition that does not have excessively high addition reactivity, prevents gel generation after preparation, and yet is capable of forming a crosslinked structure that can achieve excellent heavy release; and a release sheet on which a cured film of the composition is formed.

As a result of their diligent study of the above problems, the inventors found that a composition including: linear or branched organopolysiloxane (A) having in the side chain at least 3 alkenyl groups bonded to a silicon atom per molecule, a viscosity at 25°C of 100 mPa·s or more, and a vinyl value of 0.05 mol/100 g or more and 0.3 mol/100 g or less; organopolysiloxane (B) having a three-dimensional network structure having at least 2 alkenyl groups per molecule; an olefin (C) that is in a liquid state at 25°C; organohydrogenpolysiloxane (D) having at least 2 hydrogen atoms bonded to a silicon atom per molecule; and a platinum group metal-based catalyst (E), had an excellent heavy-release effect, reduced decrease in release strength over time after curing, and, in addition, had an excellent pot life. And then, they have completed the present invention. In particular, by using the linear or branched organopolysiloxane having at least 3 alkenyl groups bonded to a silicon atom per molecule, a viscosity at 25°C of 100 mPa·s or more, and a vinyl value of 0.05 mol/100 g or more and 0.3 mol/100 g or less, the inventive composition is solventless in spite of not having excessively high addition reactivity, and can provide a release sheet with highly heavy-release.

That is, the present invention is a release agent composition comprising the following components (A) to (E),
(A) linear or branched organopolysiloxane having in the side chain at least 3 alkenyl groups bonded to a silicon atom per molecule, a viscosity at 25°C of 100 mPa·s or more, and a vinyl value of 0.05 mol/100 g or more and 0.3 mol/100 g or less: 20 to 65 parts by mass based on 100 parts by mass of sum of the components (A) and (B);
(B) organopolysiloxane having R'₃SiO_{1/2} unit and SiO_{4/2} unit and/or R'SiO_{3/2} unit, having at least 2 alkenyl groups bonded to a silicon atom per molecule, and having a three-dimensional network structure, wherein, in each of the formulae above, R' represents a substituted or unsubstituted monovalent hydrocarbon group having 1 to 12 carbon atoms and optionally having an unsaturated bond: 35 to 80 parts by mass based on 100 parts by mass of the sum of the components (A) and (B);
(C) an olefin that is in a liquid state at 25°C: 0 to 20 parts by mass based on 100 parts by mass of the sum of the components (A) and (B);
(D) organohydrogenpolysiloxane having at least 2 hydrogen atoms bonded to a silicon atom per molecule: an amount such that the ratio of the number of hydrogen atoms bonded to a silicon atom in the component (D) relative to total number of alkenyl groups in the components (A), (B), and (C) is 0.5 to 5; and
(E) a platinum group metal-based catalyst: an effective amount.

Hereinafter, the present invention will be described in detail below, but is not limited thereto. In this specification, "Me" represents a methyl group and "Vi" represents a vinyl group.

### [(A) Alkenyl-Containing Organopolysiloxane]

The component (A) is a linear or branched organopolysiloxane having in the side chain at least 3 alkenyl groups bonded to a silicon atom per molecule, a viscosity at 25°C of 100 mPa·s or more, and a vinyl value of 0.05 mol/100 g or more and 0.3 mol/100 g or less.

The component (A) is a component used to adjust the viscosity of the composition and the release force of the cured product, and specifically is a linear organopolysiloxane represented by the following average composition formula (1), having in the side chain at least 3, preferably 3 to 50, and more preferably 3 to 30 alkenyl groups bonded to a silicon atom per molecule.

(R²₃SiO_{1/2})ₐ(R¹R²₂SiO_{1/2})_{b}(R¹R²SiO)_{c}(R²₂SiO)_{d}(R¹SiO_{3/2})ₑ(R²SiO_{3/2} )_{f}(SiO_{4/2})_{g} (1)

In the average composition formula (1), R¹ independently represents an alkenyl group; R² independently represents an unsubstituted or substituted monovalent hydrocarbon group not having an alkenyl group; and "a", "b", "c", "d", "e", "f", and "g" each independently represent numbers of 0 or more and satisfy 0≤a, 0≤b, 2≤a+b, 3≤c, 50≤d, 90≤c+d≤400, 0≤e≤8, 3≤b+c+e, 0≤f≤8, 0≤g≤8, and 0≤f+g≤8.

The organopolysiloxane has a viscosity at 25°C of 5,000 mPa·s or less, preferably 3,000 mPa·s or less, more preferably 1,500 mPa·s or less. The organopolysiloxane preferably has a linear molecular structure in which the main chain is composed of repeating units of diorganosiloxane units and the molecular chain end is blocked with a triorganosiloxy group. When the viscosity is at or below the upper limit above, it is possible to achieve the desired heavy-release effect without reducing the cured product's crosslinking density, making it preferable. The lower limit is 100 mPa·s or more, and preferably 200 mPa·s or more. When the viscosity is below the lower limit, silicone gel may generate easily in the composition, making it undesirable.

Furthermore, even if no silicone gel generates, there is a risk of causing a problem of increasing the viscosity of the composition significantly. Note that in this invention, the viscosity is the absolute viscosity value measured using a B-type rotational viscometer at 25°C (the same applies hereinafter).

The vinyl value of the component (A) is 0.05 or more and 0.3 mol/100g or less. When the vinyl value of component (A) is less than 0.05 mol/100g, the curability may be reduced. On the other hand, when the vinyl value exceeds 0.3 mol/100g, releasability of the cured coating may be reduced. The vinyl value is particularly preferably 0.07 or more and 0.2 mol/100g or less.

In the above formula (1), "a" "b", "c", "d", "e", "f", and "g" each independently represent numbers of 0 or more and satisfy 0≤a, 0≤b, 2≤a+b, 3≤c, 50≤d, 90≤c+d≤400, 0≤e≤8, 3≤b+c+e, 0≤f≤8, 0≤g≤8, and 0≤f+g≤8; and preferably 2≤a≤20, 2≤b≤20, 4≤a+b≤20, 3≤c≤40, 55≤d≤220, 95≤c+d≤250, 0≤e≤5, 5≤b+c+e≤60, 0≤f≤5, 0≤g≤5, and 0≤f+g≤5.

The alkenyl group bonded to a silicon atom preferably has 2 to 8 carbon atoms, more preferably 2 to 4 carbon atoms. Examples include a vinyl group, an aryl group, a butenyl group, a pentenyl group, a hexenyl group, and a heptenyl group. A vinyl group is preferable. In an organopolysiloxane molecule, the alkenyl group bonded to a silicon atom may be present at a molecular chain end in addition to being in a side chain.

The organic group bonded to the silicon atom other than the alkenyl group is not particularly limited as long as it does not contain an aliphatic unsaturated bond. For example, it may be an unsubstituted or substituted monovalent hydrocarbon group having typically 1 to 12 carbon atoms, preferably 1 to 10 carbon atoms. Examples of the unsubstituted or substituted monovalent hydrocarbon group include alkyl groups, such as a methyl group, an ethyl group, a propyl group, a butyl group, a pentyl group, a hexyl group, and a heptyl group; cycloalkyl groups, such as a cyclohexyl group; aryl groups, such as a phenyl group, a tolyl group, a xylyl group, and a naphthyl group; aralkyl groups, such as a benzyl group and a phenethyl group; and halogenated alkyl groups in which part or all of the hydrogen atoms in these groups are substituted with a halogen atom, such as a chlorine atom, a fluorine atom, or a bromine atom, which are exemplified by a chloromethyl group, a 3-chloropropyl group, a 3,3,3-trifluoropropyl group, etc. Alkyl groups are preferable, and a methyl group is more preferable.

The amount of the component (A) is 20 to 65 parts by mass, preferably 22 to 55 parts by mass, and more preferably 25 to 50 parts by mass, based on 100 parts by mass of sum of the components (A) and (B). When the contained amount of the component (A) is less than the above lower limit, the viscosity of the resulting composition will be significantly increased, leading to reduced handling and reduced coating precision. When the amount of component (A) exceeds the above upper limit, the crosslinking density of the cured product is reduced, making it difficult to achieve the desired heavy-release effect.

Examples of the linear organopolysiloxane include those represented by the structure shown below. In the formulae, "R" represents a methyl group or a vinyl group, and one kind of the component (A) may be used, or two or more kinds of the component (A) may be used.

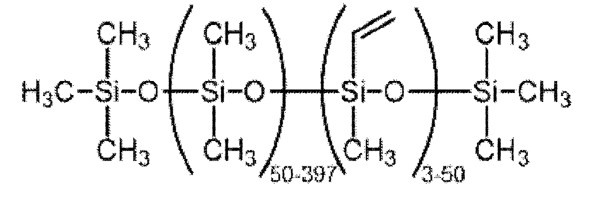

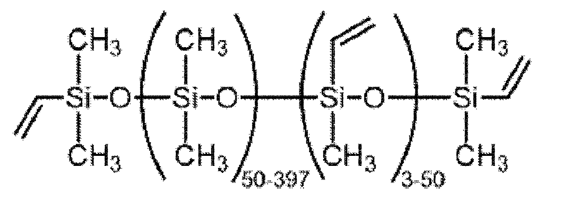

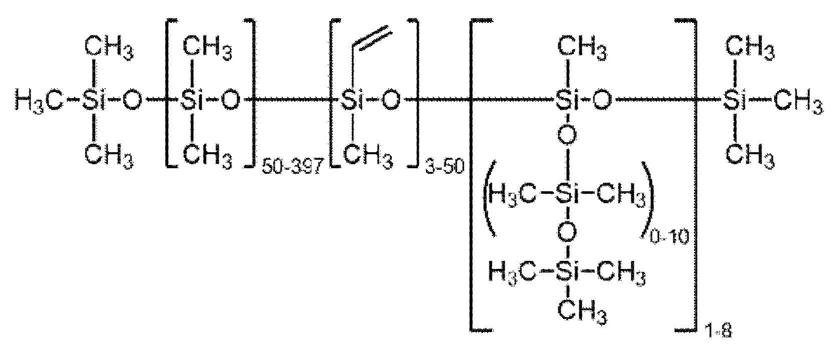

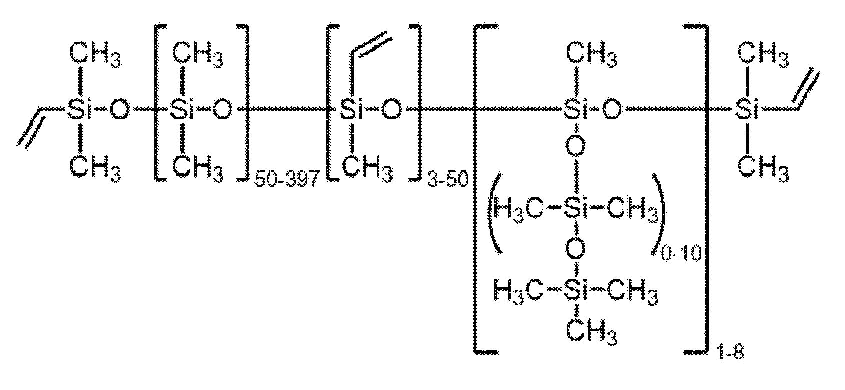

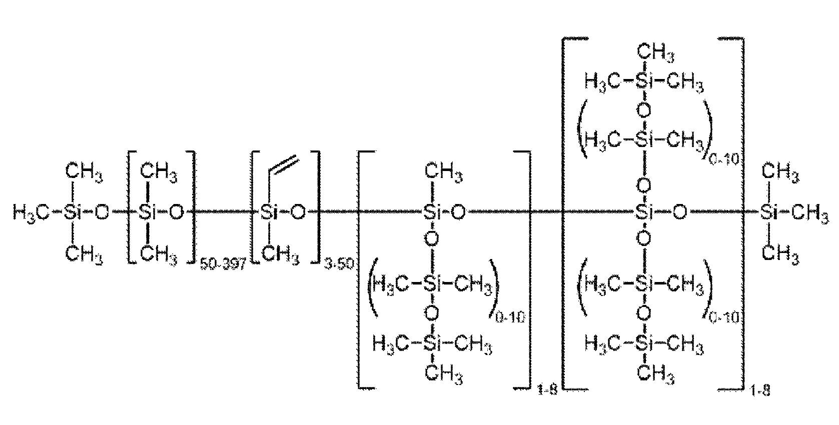

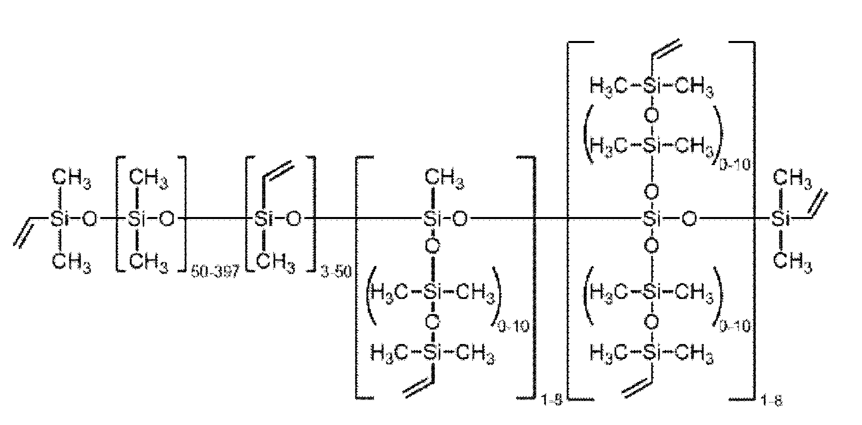

### [(B) Organopolysiloxane Having Three-Dimensional Network Structure]

The component (B) is organopolysiloxane having R'₃SiO_{1/2} unit and SiO_{4/2} unit and/or R'SiO_{3/2} unit, having at least 2 alkenyl groups bonded to a silicon atom per molecule, and having a three-dimensional network structure, wherein in each of the formulae above R' represents a substituted or unsubstituted monovalent hydrocarbon group having 1 to 12 carbon atoms and optionally having an unsaturated bond.

The component (B) is a component to impart a heavy-release effect and specifically represented by the following average composition formula (2).

(R⁴₃SiO_{1/2})ₕ(R³R⁴₂SiO_{1/2})ᵢ(R³R⁴SiO)ⱼ(R⁴₂SiO)ₖ(R³SiO_{3/2})ₗ(R⁴SiO_{3/2} )ₘ(SiO_{4/2})ₙ (2)

In the formula, R³ each independently represents an alkenyl group having 2 to 8 carbon atoms; R⁴ each independently represents an unsubstituted or substituted monovalent hydrocarbon group not being an alkenyl group and having 1 to 12 carbon atoms, wherein at least 80 mol% of all R⁴s are methyl groups; and "h", "i", "j", "k", "l", "mm", and "n" each independently represent number of 0 or more and satisfy i+j+l>0, l+m+n>0, and h+i+j+k+l+m+n=1.The component (B) is preferably waxy or solid at 25°C. Here, "waxy" refers to a gum-like (raw rubber-like) material that has a viscosity at 25°C of 10,000 Pa·s or more, particularly 100,000 Pa·s or more, and exhibits almost no self-flowing property.

In the above formula (2), "h", "i", "j", "k", "l", "m", and "n" are each independently a number of 0 or more and satisfy i+j+l>0, l+m+n>0, and h+i+j+k+l+m+n=1.
"h" is preferably a number of 0 to 0.65, and particularly preferably 0.2 to 0.4.
"i" is preferably a number of 0 to 0.12, and particularly preferably 0.03 to 0.07.
"j" is preferably a number of 0 to 0.2, and particularly preferably 0 to 0.1.
"k" is preferably a number of 0 to 0.2, and particularly preferably 0 to 0.1.
"l" is preferably a number of 0 to 0.2, and particularly preferably 0 to 0.1.
"m" is preferably a number of 0 to 0.2, and particularly preferably 0 to 0.1.
"n" is preferably a number of 0 to 0.6, and particularly preferably 0.23 to 0.6.

Furthermore, i+j+l is preferably between 0 and 0.5, particularly preferably between 0 and 0.2, and l+m+n is preferably between 0.1 and 0.8, particularly preferably between 0.2 and 0.6.

In the formula (2) above, examples of the alkenyl group represented by R³ include the silicon atom-bonded alkenyl groups exemplified in the component (A) above, and a vinyl group is particularly preferable. Examples of the unsubstituted or substituted monovalent hydrocarbon group represented by R⁴ and not being an alkenyl group include organic groups other than the silicon atom-bonded alkenyl groups exemplified in the component (A) above. Among these, a methyl group is preferable, and at least 80 mol%, preferably 90 to 98%, of all R⁴s are a methyl group. When the proportion of methyl groups is 80 mol% or more of all R⁴s, excellent compatibility with the component (A) above is achieved, and the release agent composition does not separate with white cloudiness, resulting in a uniform coating.

In the component (B), the contained amount of the alkenyl groups bonded to a silicon atom is preferably in the range of 0.01 to 1 mol, more preferably 0.05 to 0.2 mol, and further preferably 0.06 to 0.1 mol per 100 g of the component (B). When the alkenyl group content is in the range of 0.01 to 1 mol, the crosslinking reaction proceeds sufficiently, resulting in a cured product with higher hardness.

The amount of component (B) is 35 to 80 parts by mass, preferably 40 to 60 parts by mass, and more preferably 45 to 50 parts by mass, based on 100 parts by mass of the sum of components (A) and (B). When the contained amount of the component (B) exceeds the above upper limit, the viscosity of the composition to be obtained is significantly increased, resulting in reduced handling and reduced coating precision. When the contained amount of the component (B) is less than the above lower limit, the crosslinking density of the cured product is reduced, making it difficult to achieve the desired heavy-release effect.

Examples of the component (B) organopolysiloxane resins include the following.

(Me₃SiO_{1/2})ₕ(ViMe₂SiO_{1/2})ᵢ(SiO_{4/2})ₙ

(ViMe₂SiO_{1/2})ᵢ(SiO_{4/2})ₙ

(ViMeSiO)ⱼ(Me₂SiO)ₖ(MeSiO_{3/2})ₘ

(ViMe₂SiO_{1/2})ᵢ(Me₂SiO)ₖ(ViSiO_{3/2})ₗ

(ViMe₂SiO_{1/2})ᵢ(Me₂SiO)ₖ(MeSiO_{3/2})ₘ

(Me₃SiO_{1/2})ₕ(ViMe₂SiO_{1/2})ᵢ(Me₂SiO)ₖ(MeSiO_{3/2})ₘ

(Me₃SiO_{1/2})ₕ(ViMe₂SiO_{1/2})ᵢ(Me₂SiO)ₖ(ViMeSiO)ⱼ(MeSiO_{3/2})ₘ

In the formulae, "h", "I", "j", "k", "l", "m", and "n" are as defined in the average composition formula (2) above.

In particular, it is more preferable to use an organopolysiloxane resin composed of Me₃SiO_{1/2}, ViMe₂SiO_{1/2}, and SiO_{4/2} units. By using such an organopolysiloxane resin, the crosslinking density of the resulting cured product is sufficiently high, making it possible to achieve the desired heavy-release effect. One kind of the component (B) may be used, and two or more kinds thereof may be used in combination.

### [(C) Liquid Olefin]

The component (C) is an olefin that is in a liquid state at 25°C.

The component (C) is a so-called viscosity-reducing agent, whose addition in small amounts reduces the viscosity of the composition. There are no particular restrictions on the olefin as long as it is an olefin having a liquid form at 25°C, and it may be selected appropriately from publicly known olefins. However, monoolefins are particularly preferable. For example, diolefins may result in excessively high crosslinking density, which may cause peeling noise during peeling. Preferably, the component is a linear monoolefin having 10 to 18 carbon atoms or a branched monoolefin having 10 or more carbon atoms.

Conventionally, methods for reducing the viscosity of organopolysiloxane compositions included adding solvents and adding low-viscosity organopolysiloxane components. However, the use of highly volatile solvents can be harmful to humans and the environment, making the use of solvents undesirable from a safety perspective. Although the viscosity can also be reduced by adding a low-volatility, low-viscosity organopolysiloxane component, the diligent study of the inventors have revealed that their viscosity-reducing effect is weaker than that of hydrocarbon-based compounds. Therefore, adding a low-viscosity organopolysiloxane component to reduce viscosity requires the addition of a large amount of the component, making it difficult to achieve the desired heavy-release effect.

In contrast, an olefin that is liquid at 25°C (particularly preferably a linear monoolefin having 10 to 18 carbon atoms or a branched monoolefin having 10 or more carbon atoms) has a high viscosity-reducing effect on the organopolysiloxane composition, so a small amount is sufficient to reduce the viscosity, and the heavy-release effect is not impaired. Furthermore, because it contain a reactive group (particularly an olefin moiety) with the organopolysiloxane composition (particularly SiH), they are incorporated into the cured film and do not volatilize or migrate to the tape. Therefore, they are extremely useful for controlling the viscosity of the release agent composition.

In the present invention, the olefin may be either linear or branched, but is preferably a linear monoolefin having 10 to 18 carbon atoms or a branched monoolefin having 10 or more carbon atoms. The linear monoolefins preferably have 10 to 18 carbon atoms, more preferably 12 to 18 carbon atoms, and further preferably 14 to 18 carbon atoms. A monoolefin having the number of carbon atoms satisfying the above upper limit is preferable because it is liquid at 25°C. Furthermore, a monoolefin having the number of carbon atoms at or more than the above lower limit is less volatile and therefore safer for humans and the environment. Examples of such linear monoolefins include 1-tetradecene, 1-hexadecene, and 1-octadecene. More specifically, commercially available products in "LINEALENE" series (e.g., " LINEALENE 14", "LINEALENE 16", "LINEALENE 18", etc., manufactured by Idemitsu Kosan Co., Ltd.) can be used.

From the viewpoint of volatility, the branched monoolefin preferably has 10 or more carbon atoms, more preferably 15 or more. There is no particular upper limit on the number of carbon atoms, as long as it is liquid at 25°C. It is preferably 50 or less, and more preferably 40 or less. Furthermore, when a mixture of two or more branched monoolefins is used, such as HS Dimer A-20P exemplified below, a small amount of a branched monoolefin having more than 50 carbon atoms may be mixed. Examples of such branched monoolefins to be used include commercially available products in "HS Dimer" series (e.g., "A-20", "A-20P", etc., manufactured by Hokoku Corporation) represented by the following formulae. One kind of the component (C) may be used, or two or more kinds thereof may be used in combination.

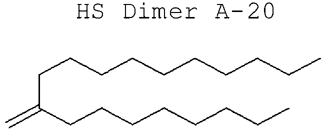

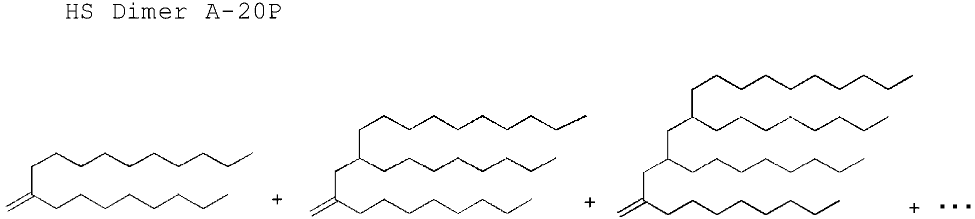

The blending amount of the component (C) is 0 to 20 parts by mass, preferably 0.1 to 18 parts by mass, more preferably 1 to 15 parts by mass, and further preferably 4 to 12 parts by mass, based on 100 parts by mass of the sum of components (A) and (B). When the amount of the component (C) exceeds the above upper limit, the viscosity of the resulting composition will be excessively low, resulting in poor coatability. When the component (C) is blended, the amount of the component (C) is preferably at or more than the above lower limit, since the effect as a viscosity-reducing agent can be obtained.

### [(D) Organohydrogenpolysiloxane]

The component (D) is an organohydrogenpolysiloxane having at least 2 hydrogen atoms (hereinafter referred to as SiH groups) bonded to a silicon atom per molecule. Publicly known organohydrogensiloxane to be used for addition-reaction silicone compositions can be used. For example, it can be represented by the following average composition formula (3).

(R⁶₃SiO_{1/2})ₚ(R⁵R⁶₂SiO_{1/2})_{q}(R⁵R⁶SiO)ᵣ(R⁶₂SiO)ₛ(R⁵SiO_{3/2})ₜ(R⁶SiO_{3/2} )ᵤ(SiO_{4/2})ᵥ (3)

In the formula, R⁵ independently represents a hydrogen atom; R⁶ independently represents an unsubstituted or substituted monovalent hydrocarbon group other than a hydrogen atom; and "p", "q", "r", "s", "t", "u", and "v" each independently represent numbers of 0 or more and satisfy 0≤p, 0≤q, 0≤p+q, 0≤r, 40≤s, 90≤r+s≤400, 0≤t≤8, 2≤q+r+t, 0≤u≤8, 0≤v≤8, and 0≤u+v≤8.

An alkenyl group contained in the components (A), (B), and (C) undergoes an addition reaction with a SiH group in the component (D) to form a crosslinked structure. That is, the component (D) functions as a crosslinking agent. The component (D) preferably has a viscosity of 1,000 mPa·s or less at 25°C, more preferably 100 to 500 mPa·s, and further preferably 100 to 200 mPa·s. When the viscosity satisfies the above upper limit, the overall composition does not become highly viscous, resulting in good handling and good coating precision. The viscosity is the value of the absolute viscosity measured using a B-type rotational viscometer at 25°C. From the viewpoint of crosslinking balance, the amount of the component (D) to be blended is preferably an amount such that the ratio of the number of SiH groups in the component (D) relative to total number of alkenyl groups in the components (A), (B), and (C) is 0.5 to 5, preferably 0.7 to 3.0. When the amount of component (D) does not satisfy the above range, the crosslinking balance may become inappropriate.

The contained amount of the SiH groups in the component (D) is preferably in the range of 0.1 to 2 mol, more preferably 0.2 to 1.7 mol, per 100 g of the component (D). In the average composition formula (3), the unsubstituted or substituted monovalent hydrocarbon group other than a hydrogen atom represented by R⁶ includes the silicon atom-bonded organic groups other than the alkenyl groups exemplified for the component (A) above. A methyl group is preferable, and it is preferable that at least 50 mol%, typically 60 to 100 mol%, of all R⁶s are methyl groups. When the proportion of methyl groups is 50 mol% or more of all R⁶s, the compatibility with the components (A) and (B) is excellent, and the release agent composition does not become cloudy in white or undergo phase separation. In the average composition formula (3), "p", "q", "r", "s", "t", "u", and "v" each independently represent numbers of 0 or more and satisfy 0≤p, 0≤q, 0≤p+q, 0≤r, 40≤s, 90≤r+s≤400, 0≤t≤8, 2≤q+r+t, 0≤u≤8, 0≤v≤8, and 0≤u+v≤8. Preferably they satisfy 0≤p≤20, 0≤q≤20, 0≤p+q≤20, 3≤r≤60, 50≤s≤200, 95≤r+s≤250, 0≤t≤5, 5≤q+r+t≤70, 0≤u≤5, 0≤v≤5, and 0≤u+v≤5.

The component (D) has at least 2 SiH groups per molecule, typically 2 to 200, and preferably 3 to 100. The SiH group may be located either at the terminals or in the middle of the molecular chain, or both. The molecular structure of the organohydrogenpolysiloxane may be linear, cyclic, branched, or a three-dimensional network structure, but the number of silicon atoms per molecule (or degree of polymerization) is typically 100 to 300, preferably about 100 to 200.

Examples of organohydrogenpolysiloxane represented by the average composition formula (3) above include a methylhydrogensiloxane-dimethylsiloxane cyclic copolymer, a dimethylsiloxane-methylhydrogensiloxane copolymer with both ends blocked with trimethylsiloxy groups, dimethylpolysiloxane with both ends blocked with dimethylhydrogensiloxane groups, a dimethylsiloxane-methylhydrogensiloxane copolymer with both ends blocked with dimethylhydrogensiloxane groups, a methylhydrogensiloxane-diphenylsiloxane copolymer with both ends blocked with trimethylsiloxy groups, a methylhydrogensiloxane-diphenylsiloxane-dimethylsiloxane copolymer with both ends blocked with trimethylsiloxy groups, a methylhydrogensiloxane-methylphenylsiloxane-dimethylsiloxane copolymer with both ends blocked with trimethylsiloxy groups trimethylsiloxy groups, a methylhydrogensiloxane-dimethylsiloxane-diphenylsiloxane copolymer with both ends blocked with dimethylhydrogensiloxy groups, and a methylhydrogensiloxane-dimethylsiloxane-methylphenylsiloxane copolymer with both ends blocked with dimethylhydrogensiloxy groups. One kind of the component (D) may be used, or two or more kinds thereof may be used in combination.

Examples of the component (D) include cyclic siloxanes or linear siloxanes represented by the following formulae.

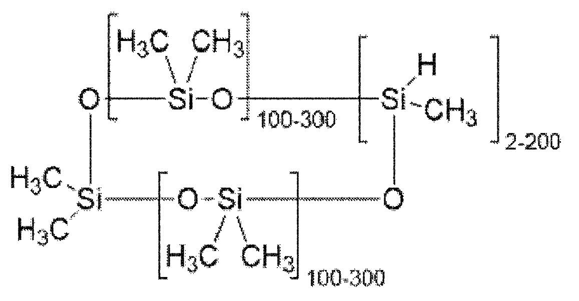

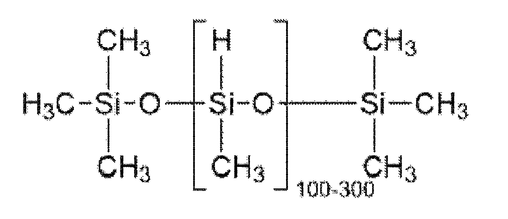

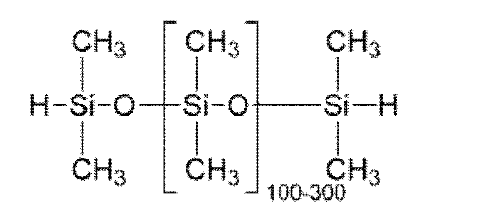

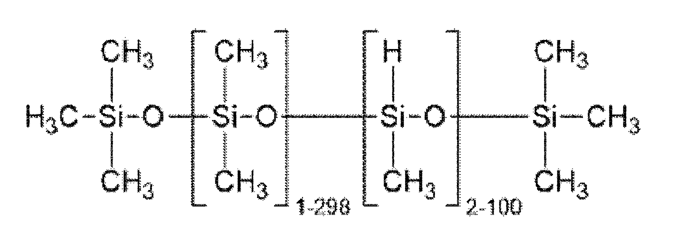

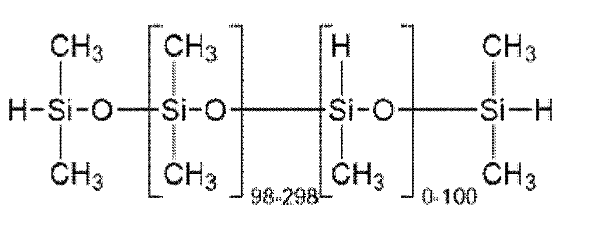

### [(E) Platinum Group Metal-Based Catalyst]

The component (E) platinum group metal-based catalyst promotes the addition reaction of the components (A), (B), and (C) with the component (D). Any publicly known catalyst known to those skilled in the art for promoting the hydrosilylation reaction can be used. Examples of such platinum group metal-based catalysts include platinum-based, palladium-based, rhodium-based, and ruthenium-based catalysts. Among these, platinum-based catalysts are particularly preferably used. Examples of the platinum-based catalysts include chloroplatinic acid, alcoholic or aldehyde solutions of chloroplatinic acid, complexes of chloroplatinic acid with various olefins or vinylsiloxanes, and platinum complexes with various olefins or vinylsiloxanes.

The blending amount of the component (E) may be what is called an effective amount as a catalyst. For example, from the viewing point of obtaining a suitable cured film and an economical standpoint, the amount may be in the range of 0.1 to 1000 ppm, more preferably 1 to 500 ppm, in terms of the mass of the platinum group metal, relative to the total mass of the components (A), (B), (C), and (D).

### [Other Components]

In addition to the components (A) to (E) above, the inventive release agent composition may contain other optional components. Examples include the following. One kind of these other components may be used, or two or more kinds thereof may be used in combination.

### · Alkenyl group-containing compounds other than components (A), (B), and (C)

In addition to the components (A), (B), and (C), the inventive composition may also contain, as necessary, an alkenyl group-containing compound that undergoes an addition reaction with the component (D). Such alkenyl group-containing compounds other than components (A), (B), and (C) are preferably those that contribute to formation of a cured product, and examples thereof include organopolysiloxanes other than components (A), (B), and (C), which contain at least one alkenyl group per molecule. Their molecular structure may be, for example, linear, cyclic, branched, or of a three-dimensional network. It is particularly preferable to contain 0 to 20 parts by mass of the component (F) having the following structure. 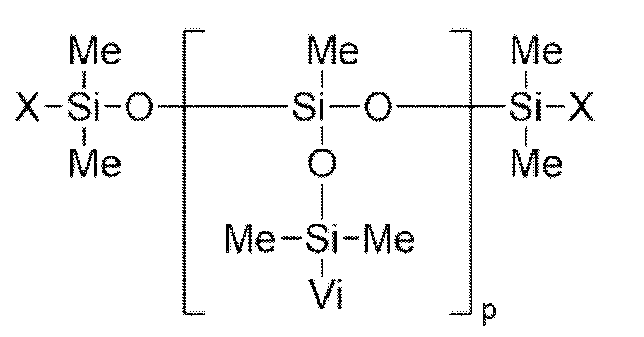 (1≤p≤20; "x" represents a group selected from a methyl group, a methoxy group, and a vinyl group, or an oxygen atom that gives a ring structure.)

"an oxygen atom that gives a ring structure" means: when "x" is an oxygen atom, the silicon atoms on the left and right sides in the formula are connected by siloxane bonds by way of the oxygen to form a cyclic structure.

### · Addition-reaction control agent

To ensure a long pot life, an addition-reaction control agent can be blended into the inventive composition. The addition-reaction control agent is not particularly limited as long as it is a compound that has a curing inhibitory effect on the platinum group metal-based catalyst (E) above, and conventionally publicly known addition-reaction control agents can be preferably used. Examples thereof include phosphorus-containing compounds, such as triphenylphosphine; nitrogen-containing compounds, such as tributylamine, tetramethylethylenediamine, and benzotriazole; sulfur-containing compounds; acetylene-based compounds, such as acetylene alcohols (e.g., 1-ethynylcyclohexanol and 3,5-dimethyl-1-hexyn-3-ol); compounds containing two or more alkenyl groups; hydroperoxy compounds; and maleic acid derivatives. The degree of the curing inhibitory effect by an addition-reaction control agent varies depending on its chemical structure. Therefore, the blending amount of each addition-reaction control agent to be used can be appropriately adjusted for each agent according to a conventionally known method. By adding an appropriate amount of the addition-reaction control agent, the release agent composition has excellent long-term storage stability at room temperature and excellent heat-curability.

### Other optional components

Furthermore, as necessary, it is possible to add publicly known antioxidants, pigments, stabilizers, antistatic agents, defoamers, adhesion promoters, thickeners, or inorganic fillers such as silica. The blending amount thereof may be selected as appropriate according to conventional techniques.

### [Release Agent Composition]

The inventive composition preferably has a viscosity at 25°C of 50 to 1,000 mPa·s, more preferably 80 to 500 mPa·s. When the viscosity is within the range above, a base material can be coated with the composition to form a cured film, and the resultant coating film is uniform, making it suitable. Because the inventive composition does not require a solvent, it can be used as a solventless release agent composition.

### [Method for Manufacturing Release Sheet Composition]

The method for manufacturing the inventive release agent composition is not particularly limited, but a method in which the components (A) to (D) above and optional components are uniformly mixed in advance, and then the catalyst (E) is added immediately before use, is preferable in terms of a pot life.

### [Release Sheet]

The present invention further provides a release sheet having a sheet-like base material and a cured film of the release agent composition on either or both of the surfaces of the base material. The coating method is not particularly limited. For example, the cured film can be formed on the base material by: applying the inventive composition onto either or both surfaces of a sheet-like base material, such as paper or film, at a rate of 0.01 to 100 g/m², according to coating methods, such as coating using a comma coater, a lip coater, a roll coater, a die coater, a knife coater, a blade coater, a rod coater, a kiss coater, a gravure coater, a wire bar coater, or the like, screen coating, dip coating, and cast coating; and heating the composition at a temperature ranging from 50 to 200°C for 1 to 120 seconds. When forming a release layer on both sides of the base material, it is preferable to perform the operation of forming a cured film for each side of the base material separately.

The sheet-like base materials include paper and various films known publicly. Examples of such base materials include: polyethylene-laminated paper; glassine paper; fine paper; kraft paper; various coated papers, such as clay-coated paper; synthetic paper, such as Yupo; polyethylene film; polypropylene films, such as CPP and OPP; polyester films, such as polyethylene terephthalate film; polyamide film; polyimide film; polylactic acid film; polyphenol film; and polycarbonate film. They may also be paper used in manufacturing processes, such as artificial leather, ceramic sheets, and double-sided separators. To improve adhesion between the base material and the release layer (cured film), the surface of the base material to be used may be corona-treated, etched, primer-treated, or plasma-treated.

More specifically, a release sheet can be produced, for example, by coating a polylaminated paper base material with 1.0 to 1.5 g/m² of the inventive release agent composition, followed by heating at 140°C for 30 seconds.

The release sheet preferably has a release force of 3.0 N/25mm or more, measured when a polyester adhesive tape with a 25 mm width stuck to the cured film is peeled off at an angle of 180 degrees at a peeling speed of 0.3 m/min. There is no particular upper limit, but because too high release force may cause cohesive failure between an adhesive tape and a coating film, it can be set to 20.0 N/25mm or less.

### EXAMPLE

Hereinafter, the present invention will be specifically described with reference to Examples and Comparative Examples, but the present invention is not limited thereto. The viscosities described below are all values measured using a B-type rotational viscometer at 25°C. In the following examples, "parts" means "parts by mass", and Me and Vi represent a methyl group and a vinyl group, respectively.

The components used in Examples and Comparative Examples are as follows. Hereinafter, the vinyl value refers to the number of moles of vinyl groups per 100 g of each component, and the SiH group content refers to the number of moles of SiH groups per 100 g of each component. Viscosity values are measured at 25°C. The bonding order of the siloxane units shown in parentheses is not limited to the following.
Component (A)
   (A1) (ViMe₂SiO_{1/2})₂(Me₂SiO)₁₂₀(ViMeSiO)₁₈
      Vinyl value: 0.187 mol/100g, Viscosity: 300 mPa·s
   (A2) (ViMe₂SiO_{1/2})₂(Me₂SiO)₉₅(ViMeSiO)₃
      Vinyl value: 0.068 mol/100g, Viscosity: 200 mPa·s
   (A3) (ViMe₂SiO_{1/2})₂(Me₂SiO)₂₁₀(ViMeSiO)₁₀
      Vinyl value: 0.071 mol/100g, Viscosity: 840 mPa·s
   (a4) (ViMe₂SiO_{1/2})₂(Me₂SiO)₁₀₁
      Vinyl value: 0.027 mol/100g, Viscosity: 190 mPa·s
   (a5) (ViMe₂SiO_{1/2})₃(Me₂SiO)₁₅₇(MeSiO_{3/2})
      Vinyl value: 0.026 mol/100g, Viscosity: 250 mPa·s
   (a6) (ViMe2SiO1/2)2 (Me₂SiO)10
      Vinyl value: 0.211 mol/100g, Viscosity: 9.0 mPa·s
   (a7) (ViMe₂SiO_{1/2})₂(Me₂SiO)₆₀
      Vinyl value: 0.039 mol/100g, Viscosity: 100 mPa·s
Component (B)
   (B1) (Me₃SiO_{1/2})_{0.38}(ViMe₂SiO_{1/2})_{0.06}(SiO_{4/2})_{0.56}
   Vinyl value: 0.086 mol/100g, Solid at 25°C
Component (C)
   (C1) 1-Tetradecene (Linearene 14, manufactured by Idemitsu Kosan Co., Ltd.)
   Vinyl value: 0.51 mol/100g, Viscosity: 2.4 mPa·s
Component (D)
   (D1) (Me₃SiO_{1/2})₂(MeHSiO)₃₀(Me₂SiO)₇₀
      SiH group content: 1.098 mol /100g, Viscosity: 119 mPa·s
   (D2) (Me₃SiO_{1/2})₂(MeHSiO)₅₀(Me₂SiO)₁₈
      SiH group content: 0.791 mol/100g, Viscosity: 118 mPa·s
Component (E)
   (E1) Catalyst: Platinum-vinylsiloxane complex
Component (F)
   (F1) (MeSiO_{3/2}-ViMe₂SiO_{1/2})n
   Vinyl number: 0.53 mol/100g, Viscosity: 25 mPa·s
Component (G) (Other components)
   (G1) Addition reaction inhibitor (pot life extender): 1-ethynylcyclohexanol

### Example 1

Linear dimethylpolysiloxane represented by the above average formula (A1) (ViMe₂SiO_{1/2})₂(Me₂SiO)₁₂₀(ViMeSiO_{1/2})₁₈ and xylene solution of organosiloxane represented by the above average formula (B1) (Me₃SiO_{1/2})_{0.38}(ViMe₂SiO_{1/2})_{0.06}(SiO_{4/2})_{0.56} were mixed in a mass ratio of 40.0/40.0 in terms of solid content. Xylene was removed from the mixture at 150°C under a reduced pressure of 20 mmHg or less, and after cooling, 6.0 parts by mass of 1-tetradecene (C1) above, 25.2 parts by mass of methylhydrogenpolysiloxane represented by the above average formula (D1) (Me₃SiO_{1/2})₂(MeHSiO)₃₀(Me₂SiO)₇₀, 2.8 parts by mass of the above (F), and 0.2 parts by mass of 1-ethynylcyclohexanol the above (G) were mixed to obtain a transparent liquid. (The mass ratio of SiH groups in the component (D1) to the total amount of alkenyl groups in the components (A1), (B1), and (C1), i.e., H/Vi, is 1.8.) The catalyst (E) above was added to the mixture obtained above so that the amount thereof was 100 ppm in terms of platinum mass relative to the total mass of the components (A1), (B1), (C1) and (D1), and the mixture was stirred and mixed to obtain a transparent composition with a viscosity of 223 mPa·s.

### [Examples 2-6, Comparative Examples 1-4]

Using the same procedure as in Example 1, the components (A) and (B) were mixed according to the compositions shown in Tables 1 and 2 below. The xylene in the component (B) was then distilled off under reduced pressure. Next, the components (C), (D), (F), and (G) were then mixed, followed by addition of platinum catalyst (E) and mixing, to obtain the compositions of Examples 2-6 and Comparative Examples 1-4. The amounts of each component are shown in Tables 1 and 2 below. Using the resulting compositions, coated products (release sheets) were prepared and evaluated according to the methods described below.

### [Release Force]

The resulting composition was applied onto the surface of polyethylene-laminated paper at a rate of 1.0-1.1 g/m² and heated in a hot air dryer at 140°C for 30 seconds to form a cured film. The resulting cured film was then separator-aged at 25°C for one day. A 25 mm-wide polyester adhesive tape (No. 31B 75 High, manufactured by NITTO DENKO CORPORATION) was then stuck to the surface of the cured film and aged at 70°C for one day under a load of 20 gf/cm². One edge of the tape was then peeled off, and the edge was pulled at an angle of 180 degrees to the polyethylene-laminated paper of a base material at a peeling speed of 0.3 m/min. The release force (N/25mm) was measured using a tensile tester. The tensile tester used was a Shimadzu Corporation AGS-50G model.

### [Residual Adhesion Rate]

A 25 mm wide polyester adhesive tape (No. 31B 75 High, NITTO DENKO CORPORATION) was stuck to the surface of the cured film after the separator aging and aged with being stuck for one day at 70°C under a load of 20 gf/cm². The tape was peeled from the cured film and was stuck to a 25um PET film. After pressing the tape back and forth once with a 2kg tape roller, the tape was peeled at an angle of 180 degrees at 0.3 m/min using a tensile tester, and force F (N/25mm) required to peel off the tape was measured. For comparison, the polyester adhesive tape was stuck to a Teflon^{®} plate instead of the cured film, and force F₀ (N/25mm) required to peel off the tape was measured in the same manner as above. The percentage of adhesive strength remaining in the polyester adhesive tape after peeling from the release layer, compared to that in the polyester adhesive tape peeled from the Teflon (registered trademark) plate (residual adhesion ratio (%)), was calculated by the formula: F/F₀×100.

### [Presence or Absence of Gel Generation in Treatment Bath]

After preparing a composition that does not contain the component (E) shown in Tables 1 and 2 below, the component (E) was added thereto and stirred. And then, the presence or absence of silicone gel on walls of a treatment bath container or in the treatment bath was checked. When no silicone gel was observed, it was written in "Absent"; when silicone gel was observed, it was written in "Present". The results are shown in Tables 1 and 2.

**[Table 1]**

| Example | | 1 | 2 | 3 | 4 | 5 | 6 |
|---|---|---|---|---|---|---|---|
| Component (A) | (A1) | 40 | 50 | 37 | 50 | | |
| | (A2) | | | | | 25.4 | |
| | (A3) | | | | | | 25.4 |
| | (a4) | | | | | | |
| | (a5) | | | | | | |
| | (a6) | | | | | | |
| | (a7) | | | | | | |
| Component (B) | (B1) | 40 | 50 | 50 | 50 | 50 | 50 |
| Component (C) | (C1) | 6 | 8 | 8 | 10 | 8 | 8 |
| Component (D) | (D1) | 25.2 | | 18.2 | 22.0 | 18.8 | 18.8 |
| | (D2) | | 29.0 | | | | |
| Component (F) | (F1) | 2.8 | 2.8 | 2.8 | 2.8 | 2.8 | 2.8 |
| | | Relative to 100 parts by mass of total sum of the above | | | | | |
| Component (E) | (E1) | 2 | 2 | 2 | 2 | 2 | 2 |
| Component (G) | (G1) | 0.2 | 0.2 | 0.2 | 0.2 | 0.2 | 0.2 |
| Content ratio of component (B) (%) | | 35.0 | 35.7 | 43.0 | 37.0 | 47.5 | 48.8 |
| H/Vi | | 1.8 | 1.8 | 1.2 | 1.2 | 1.8 | 1.8 |
| Viscosity (mPa·s) | | 223 | 208 | 231 | 210 | 338 | 352 |
| Release force (N/25mm) | | 3.25 | 3.99 | 4.01 | 3.81 | 3.12 | 3.30 |
| Residual adhesion Ratio (%) | | 98 | 103 | 101 | 100 | 98 | 99 |
| Presence or absence of gel generation in treatment bath | | Absent | Absent | Absent | Absent | Absent | Absent |

**[Table 2]**

| Comparative Example | | 1 | 2 | 3 | 4 |
|---|---|---|---|---|---|
| Component (A) | (A1) | | | | |
| | (A2) | | | | |
| | (A3) | | | | |
| | (a4) | 25.2 | | | |
| | (a5) | | 25.1 | | |
| | (a6) | | | 39.8 | |
| | (a7) | | | | 45.3 |
| Component (B) | (B1) | 50 | 50 | 50 | 45.3 |
| Component (C) | (C1) | 4 | 4 | 4 | 4 |
| Component (D) | (D1) | 16.0 | 16.0 | 16.0 | 12.4 |
| | (D2) | | | | |
| Component (F) | (F1) | 14.6 | 14.7 | | |
| | | Relative to 100 parts by mass of total sum of the above | | | |
| Component (E) | (E1) | 2 | 2 | 2 | 2 |
| Component (G) | (G1) | 0.2 | 0.2 | 0.2 | 0.2 |
| Content ratio of component (B) (%) | | 48.2 | 48.2 | 48.2 | 45.7 |
| H/Vi | | 1.2 | 1.2 | 1.2 | 1.8 |
| Viscosity (mPa·s) | | 396 | 452 | 210 | 468 |
| Release force (N/25mm) | | 1.44 | 1.76 | 4.0 | 0.9 |
| Residual adhesion ratio (%) | | 97 | 95 | 102 | 97 |
| Presence or absence of gel generation in treatment bath | | Absent | Absent | Present | Absent |

The results of Examples 1 to 6 demonstrate that the inventive release agent composition has a viscosity at 25°C of 500 mPa·s or less, which is suitable for a solventless heavy-release agent composition. Release sheets obtained using this composition have a high release force of 3.0 N/25mm or more. Furthermore, the use of an organopolysiloxane having side-chain alkenyl groups with addition reactivity suppressed and having a high vinyl value can suppress the generation of silicone gel immediately after the composition is prepared.

On the other hand, in systems using organopolysiloxanes with no alkenyl groups in the side chains and low vinyl values (Comparative Examples 1, 2, and 4), the crosslinking density was low, resulting in weak release force. In a system using a short-chain polyorganosiloxane having alkenyl groups at both ends (Comparative Example 3), high release force was exhibited, but due to its high reactivity, silicone gel was easily generated after preparing the treatment bath. Based on these results, the compositions shown in Comparative Examples 1 to 4 are not suitable for the applications intended by the present invention.

The present description includes the following embodiments.
[1]: A release agent composition comprising the following components (A) to (E),
   (A) linear or branched organopolysiloxane having in the side chain at least 3 alkenyl groups bonded to a silicon atom per molecule, a viscosity at 25°C of 100 mPa·s or more, and a vinyl value of 0.05 mol/100 g or more and 0.3 mol/100 g or less: 20 to 65 parts by mass based on 100 parts by mass of sum of the components (A) and the following component (B);
   (B) organopolysiloxane having R'₃SiO_{1/2} unit and SiO_{4/2} unit and/or R'SiO_{3/2} unit, having at least 2 alkenyl groups bonded to a silicon atom per molecule, and having a three-dimensional network structure, wherein in each of the formulae above R' represents a substituted or unsubstituted monovalent hydrocarbon group having 1 to 12 carbon atoms and optionally having an unsaturated bond: 35 to 80 parts by mass based on 100 parts by mass of the sum of the components (A) and (B);
   (C) an olefin that is in a liquid state at 25°C: 0 to 20 parts by mass based on 100 parts by mass of the sum of the components (A) and (B);
   (D) organohydrogenpolysiloxane having at least 2 hydrogen atoms bonded to a silicon atom per molecule: an amount such that the ratio of the number of hydrogen atoms bonded to a silicon atom in the component (D) relative to total number of alkenyl groups in the components (A), (B), and (C) is 0.5 to 5; and
   (E) a platinum group metal-based catalyst: an effective amount.
[2]: The release agent composition of the above [1], wherein the component (A) is represented by the following average composition formula (1),

   (R²₃SiO_{1/2})ₐ(R¹R²₂SiO_{1/2})_{b}(R¹R²SiO)_{c}(R²₂SiO)_{d}(R¹SiO_{3/2})ₑ(R²SiO_{3/2} )_{f}(SiO_{4/2})_{g} (1)

   wherein R¹ independently represents an alkenyl group; R² independently represents an unsubstituted or substituted monovalent hydrocarbon group not having an alkenyl group; and "a", "b", "c", "d", "e", "f", and "g" each independently represent numbers of 0 or more and satisfy 0≤a, 0≤b, 2≤a+b, 3≤c, 50≤d, 90≤c+d≤400, 0≤e≤8, 3≤b+c+e, 0≤f≤8, 0≤g≤8, and 0≤f+g≤8.
[3]: The release agent composition of the above [1] or [2], wherein the component (B) is represented by the following average composition formula (2),

   (R⁴₃SiO_{1/2})ₕ(R³R⁴₂SiO_{1/2})ᵢ(R³R⁴SiO)ⱼ(R⁴₂SiO)ₖ(R³SiO_{3/2})ₗ(R⁴SiO_{3/2} )ₘ(SiO_{4/2})ₙ (2)

   wherein R³ each independently represents an alkenyl group having 2 to 8 carbon atoms; R⁴ each independently represents an unsubstituted or substituted monovalent hydrocarbon group not being an alkenyl group and having 1 to 12 carbon atoms, wherein at least 80 mol% of all R⁴s are methyl groups; and "h", "i", "j", "k", "l", "m", and "n" each independently represent number of 0 or more and satisfy i+j+l>0, l+m+n>0, and h+i+j+k+l+m+n=1.
[4]: The release agent composition of any one of the above [1] to [3], wherein the component (C) is a linear monoolefin having 10 to 18 carbon atoms or a branched monoolefin having 10 or more carbon atoms.
[5]: The release agent composition of any one of the above [1] to [4], wherein the component (D) is linear or branched organohydrogenpolysiloxane represented by the following average composition formula (3), having in the side chain at least 2 hydrogen atoms bonded to a silicon atom per molecule, and having a viscosity at 25°C of 100 mPa·s or more,

   (R⁶₃SiO_{1/2})ₚ(R⁵R⁶₂SiO_{1/2})_{q}(R⁵R⁶SiO)ᵣ(R⁶₂SiO)ₛ(R⁵SiO_{3/2})ₜ(R⁶SiO_{3/2} )ᵤ(SiO_{4/2})ᵥ (3)

   wherein R⁵ independently represents a hydrogen atom; R⁶ independently represents an unsubstituted or substituted monovalent hydrocarbon group other than a hydrogen atom; and "p", "q", "r", "s", "t", "u", and "v" each independently represent numbers of 0 or more and satisfy 0≤p, 0≤q, 0≤p+q, 0≤r, 40≤s, 90≤r+s≤400, 0≤t≤8, 2≤q+r+t, 0≤u≤8, 0≤v≤8, and 0≤u+v≤8.
[6]: The release agent composition of any one of the above [1] to [5], comprising 0 to 20 parts by mass of organopolysiloxane (F) represented by the following formula, 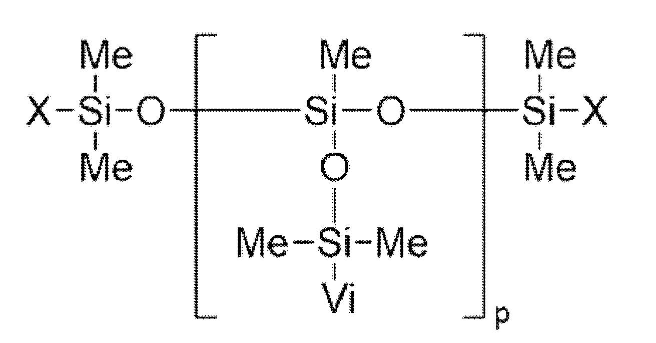 wherein "p" satisfies 1≤p≤20; "x" represents a group selected from a methyl group, a methoxy group, and a vinyl group, or an oxygen atom that gives a ring structure.
[7]: The release agent composition of any one of the above [1] to [6], wherein the release agent composition has a viscosity at 25°C of 50 to 1000 mPa·s.
[8]: The release agent composition of any one of the above [1] to [7], wherein the release agent composition does not contain a solvent.
[9]: A release sheet comprising a sheet-like base material and a cured film of the release agent composition of any one of the above [1] to [8] on either or both of the surfaces of the base material.
[10]: The release sheet of the above [9], wherein the release sheet has a release force of 3.0 N/25mm or more, measured when a polyester adhesive tape with a 25 mm width stuck to the cured film is peeled off at an angle of 180 degrees at a peeling speed of 0.3 m/min.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A release agent composition comprising the following components (A) to (E),
(A) linear or branched organopolysiloxane having in the side chain at least 3 alkenyl groups bonded to a silicon atom per molecule, a viscosity at 25°C of 100 mPa·s or more, and a vinyl value of 0.05 mol/100 g or more and 0.3 mol/100 g or less: 20 to 65 parts by mass based on 100 parts by mass of sum of the components (A) and the following component (B);
(B) organopolysiloxane having R'₃SiO_{1/2} unit and SiO_{4/2} unit and/or R'SiO_{3/2} unit, having at least 2 alkenyl groups bonded to a silicon atom per molecule, and having a three-dimensional network structure, wherein in each of the formulae above R' represents a substituted or unsubstituted monovalent hydrocarbon group having 1 to 12 carbon atoms and optionally having an unsaturated bond: 35 to 80 parts by mass based on 100 parts by mass of the sum of the components (A) and (B);
(C) an olefin that is in a liquid state at 25°C: 0 to 20 parts by mass based on 100 parts by mass of the sum of the components (A) and (B);
(D) organohydrogenpolysiloxane having at least 2 hydrogen atoms bonded to a silicon atom per molecule: an amount such that the ratio of the number of hydrogen atoms bonded to a silicon atom in the component (D) relative to total number of alkenyl groups in the components (A), (B), and (C) is 0.5 to 5; and
(E) a platinum group metal-based catalyst: an effective amount.

2. The release agent composition according to claim 1, wherein the component (A) is represented by the following average composition formula (1),
(R²₃SiO_{1/2})ₐ(R¹R²₂SiO_{1/2})_{b}(R¹R²SiO)_{c}(R²₂SiO)_{d}(R¹SiO_{3/2})ₑ(R²SiO_{3/2} )_{f}(SiO_{4/2})_{g} (1)
wherein R¹ independently represents an alkenyl group; R² independently represents an unsubstituted or substituted monovalent hydrocarbon group not having an alkenyl group; and "a", "b", "c", "d", "e", "f", and "g" each independently represent numbers of 0 or more and satisfy 0≤a, 0≤b, 2≤a+b, 3≤c, 50≤d, 90≤c+d≤400, 0≤e≤8, 3≤b+c+e, 0≤f≤8, 0≤g≤8, and 0≤f+g≤8.

3. The release agent composition according to claim 1, wherein the component (B) is represented by the following average composition formula (2),
(R⁴₃SiO_{1/2})ₕ(R³R⁴₂SiO_{1/2})ᵢ(R³R⁴SiO)ⱼ(R⁴₂SiO)ₖ(R³SiO_{3/2})ₗ(R⁴SiO_{3/2} )ₘ(SiO_{4/2})ₙ (2)
wherein R³ each independently represents an alkenyl group having 2 to 8 carbon atoms; R⁴ each independently represents an unsubstituted or substituted monovalent hydrocarbon group not being an alkenyl group and having 1 to 12 carbon atoms, wherein at least 80 mol% of all R⁴s are methyl groups; and "h", "i", "j", "k", "l", "m", and "n" each independently represent number of 0 or more and satisfy i+j+l>0, l+m+n>0, and h+i+j+k+l+m+n=1.

4. The release agent composition according to claim 1, wherein the component (C) is a linear monoolefin having 10 to 18 carbon atoms or a branched monoolefin having 10 or more carbon atoms.

5. The release agent composition according to claim 1, wherein the component (D) is linear or branched organohydrogenpolysiloxane represented by the following average composition formula (3), having in the side chain at least 2 hydrogen atoms bonded to a silicon atom per molecule, and having a viscosity at 25°C of 100 mPa·s or more,
(R⁶₃SiO_{1/2})ₚ(R⁵R⁶₂SiO_{1/2})_{q}(R⁵R⁶SiO)ᵣ(R⁶₂SiO)ₛ(R⁵SiO_{3/2})ₜ(R⁶SiO_{3/2} )ᵤ(SiO_{4/2})ᵥ (3)
wherein R⁵ independently represents a hydrogen atom; R⁶ independently represents an unsubstituted or substituted monovalent hydrocarbon group other than a hydrogen atom; and "p", "q", "r", "s", "t", "u", and "v" each independently represent numbers of 0 or more and satisfy 0≤p, 0≤q, 0≤p+q, 0≤r, 40≤s, 90≤r+s≤400, 0≤t≤8, 2≤q+r+t, 0≤u≤8, 0≤v≤8, and 0≤u+v≤8.

6. The release agent composition according to claim 1, comprising 0 to 20 parts by mass of organopolysiloxane (F) represented by the following formula, 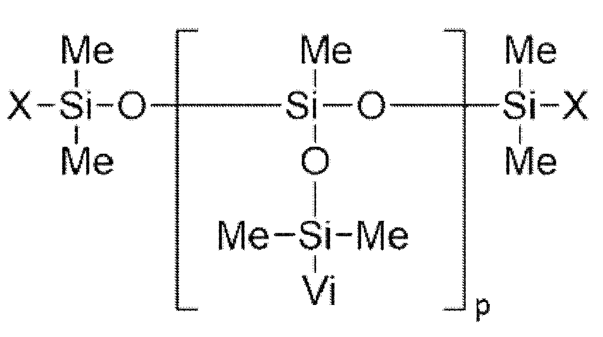 wherein "p" satisfies 1≤p≤20; "x" represents a group selected from a methyl group, a methoxy group, and a vinyl group, or an oxygen atom that gives a ring structure.

7. The release agent composition according to claim 1, wherein the release agent composition has a viscosity at 25°C of 50 to 1000 mPa·s.

8. The release agent composition according to claim 1, wherein the release agent composition does not contain a solvent.

9. A release sheet comprising a sheet-like base material and a cured film of the release agent composition according to any one of claims 1 to 8 on either or both of the surfaces of the base material.

10. The release sheet according to claim 9, wherein the release sheet has a release force of 3.0 N/25mm or more, measured when a polyester adhesive tape with a 25 mm width stuck to the cured film is peeled off at an angle of 180 degrees at a peeling speed of 0.3 m/min.
